# EUROPEAN PATENT SPECIFICATION

(11) **EP 3 272 795 B1**
(45) Date of publication and mention of the grant of the patent: **22.04.2020**
(21) Application number: 17173778.6
(22) Date of filing: 31.05.2017
(51) Int. Cl.: C09K 21/10, C09K 21/12, C08L 63/00, C08J 5/24, C08K 5/00, C08K 5/21, C08K 5/3492, C08K 5/372, C08K 5/375, C08K 5/52, C08K 5/523, C08K 5/5313

(54) **FLAME RETARDANT RESIN COMPOSITION, THERMOSETTING RESIN COMPOSITION, COMPOSITE METAL SUBSTRATE AND FLAME RETARDANT ELECTRONIC MATERIAL**
FLAMMHEMMENDE HARZZUSAMMENSETZUNG, WÄRMEHÄRTENDE HARZZUSAMMENSETZUNG, VERBUNDMETALLSUBSTRAT UND FLAMMHEMMENDES ELEKTRONISCHES MATERIAL
COMPOSITION DE RÉSINE IGNIFUGE, COMPOSITION DE RÉSINE THERMODURCISSABLE, SUBSTRAT MÉTALLIQUE COMPOSITE ET MATÉRIAU ÉLECTRONIQUE IGNIFUGE

(30) Priority: 21.07.2016 CN 201610580587
(43) Date of publication of application: 24.01.2018
(73) Proprietor: Guangdong Guangshan New Material Co., Ltd., Guangdong 523000 (CN)
(72) Inventor: PAN, Qingchong, Dongguan, Guangdong 523000 (CN)
(74) Representative: Fuchs Patentanwälte Partnerschaft mbB

(56) References cited:
- US-A1- 2006 106 135
- US-A1- 2011 045 303
- US-A1- 2015 307 703
- DATABASE WPI Week 201446 Thomson Scientific, London, GB; AN 2014-M99476 XP002776329, -& CN 103 788 580 A (SHENGYI TECHNOLOGY SUZHOU CO LTD) 14 May 2014 (2014-05-14)
- DATABASE WPI Week 201252 Thomson Scientific, London, GB; AN 2012-F52678 XP002776330, -& CN 102 432 836 A (SUZHOU SHENGYI SCI & TECHNOLOGY LTD) 2 May 2012 (2012-05-02)

## Description

### Technical field

The present invention belongs to the field of flame retardant materials, and relates to a flame retardant resin composition, a thermosetting resin composition, a composite metal substrate and a flame retardant electronic material.

### Background art

For mobile phones, computers, video cameras, electronic games as the representatives of electronic products, air conditioners, refrigerators, television images, audio supplies as the representatives of home and office electrical products and various products used in other fields, most of the products are required to have different degrees of flame retardant property for safety.

In order to achieve the desired flame retardancy or grade of the products, flame retardant substances are often added in conventional techniques to material systems, such as the addition of flame retardants to the system materials. However, due to better flame retardancy, flame retardants to be used are in a greater amount. Some flame retardant substances may produce harmful pollutants at high temperature or when combusting, pollute the environment, affect human and animal health, and even some flame retardants in the case of more content may affect other properties of the material.

US2006-1061135 describes a halogen-free ignition resistant polymer composition comprising: A) a thermoplastic polymer or polymer blend, B) a modified multi-functional epoxy resin containing from 0-20 wt. percent residual epoxy groups, based on the total weight of the epoxy resin, and C) a phosphorus containing compound. There is no indication that a sulfur compound is used in the composition.

Thus, how to reduce the use of flame retardants and to ensure flame retardant effect is an urgent problem to be solved in the field.

### Disclosure of the invention

In view of the shortcomings of the prior art, it is an object of the present invention to provide a flame retardant resin composition, a thermosetting resin composition, a composite metal substrate, and a flame retardant electronic material.

In order to achieve the object, the present invention discloses the following technical solution.

In one aspect, the present invention provides a flame retardant resin composition comprising the sulfur-containing flame retardant p-benzenedithioland and/or 4,4'-diaminodiphenyl disulfide, a phosphorus-containing flame retardant and/or a nitrogen-containing flame retardant, and a halogen-free epoxy resin.

Preferably, the sulfur element p-benzenedithioland and/or 4,4'-diaminodiphenyl disulfide in the flame retardant composition is in an amount of 5 wt.% or less, e.g. 5wt.%, 4.5 wt.%, 4 wt.%, 3.5 wt.%, 3 wt.%, 2.5 wt.%, 2 wt.%, 1.5 wt.%, 1 wt.%, 0.5 wt.%, 0.3 wt.%, 0.2 wt.%, 0.1 wt.% and the like, preferably from 0.5 to 2 wt.%.

Preferably, the phosphorus element in the flame retardant composition is in an amount of 0.1 wt.% or more, e.g. 0.1 wt.%, 0.15 wt.%, 0.2 wt.%, 0.25 wt.%, 0.3 wt.%, 0.4 wt.%, 0.5 wt.%, 0.6 wt.%, 0.7 wt.%, 0.8 wt.%, 0.9 wt.%, 1 wt.%, 1.5 wt.%, 1.8 wt.%, 2 wt.% and the like, preferably from 0.2 to 1 wt.%.

Preferably, the nitrogen element in the flame retardant composition is in an amount of 0.1 wt.% or more, e.g. 0.1 wt.%, 0.15 wt.%, 0.2 wt.%, 0.25 wt.%, 0.3 wt.%, 0.4 wt.%, 0.5 wt.%, 0.6 wt.%, 0.7 wt.%, 0.8 wt.%, 0.9 wt.%, 1 wt.%, 1.5 wt.%, 1.8 wt.%, 2 wt.% and the like, preferably from 0.1 to 1 wt.%.

Within the content ranges of the sulfur element, phosphorus element and nitrogen element defined in the present invention, the sulfur-containing flame retardant, phosphorus-containing flame retardant and/or nitrogen-containing flame retardant have mutual co-ordination and synergistic effect, so as to enhance the flame retardancy of the resin composition, which not only ensures that the resin composition has good flame retardancy, but also controls the contents of the sulfur, nitrogen and phosphorus elements at lower ranges. Within such content ranges, the overall performance of the copper-clad laminates (CCL) prepared from the flame retardant resin composition can be optimized with good heat resistance, water resistance, higher thermal decomposition temperature and the like, so that the comprehensive performance of CCL can be improved.

The present invention discloses that the addition of a small amount of a phosphorus-containing flame retardant and/or a nitrogen-containing flame retardant to form a composite flame retardant on the basis of a sulfur-containing flame retardant can make the flame retardant effects of the sulfur-containing flame retardant, phosphorus-containing flame retardant and/or nitrogen-containing flame retardant achieve mutual promotion and achieve synergistic flame retardant effect, while reducing the use of flame retardants and saving cost.

In the present invention, the contents of the sulfur element and the nitrogen element in the flame retardant resin composition are calculated as 100% by weight of the flame retardant resin composition.

Preferably, the phosphorus-containing flame retardant is anyone selected from the group consisting of DOPO etherified bisphenol A, DOPO modified epoxy resin, tri-(2,6-dimethylphenyl)phosphine, tetra-(2,6-dimethylphenyl)resorcinol bisphosphate, resorcinol tetraphenyl diphosphate, triphenyl phosphate, bisphenol A bis-(diphenyl phosphate), phosphonitrile flame retardant, 10-(2,5-dihydroxyphenyl)-10-hydro-9-oxa-10-phosphaphenanthrene-10-oxide, 10-(2,5-dihydroxynaphthyl)-10-hydro-9-oxa-10-phosphaphenanthrene-10-oxide, 9,10-dihydro-9-oxa-10-phosphaphenanthrene-10-oxide, or a mixture of at least two selected therefrom.

Preferably, the nitrogen-containing flame retardant is anyone selected from the group consisting of biurea, melamine and melamine phosphate, or a mixture of at least two selected therefrom.

Other flame retardant materials may be added to the flame retardant composition of the present invention as desired.

Preferably, said other flame retardant material is anyone selected from the group consisting of organosilicon flame retardants, chlorine-containing organic flame retardants and inorganic flame retardants, or a mixture of at least two selected therefrom.

Preferably, the organosilicon flame retardant is anyone selected from the group consisting of silicone oil, silicone rubber, silane coupling agent, polysiloxane and organosilanolamide, or a mixture of at least two selected therefrom.

Preferably, the chlorine-containing organic flame retardant is anyone selected from the group consisting of dioctyl tetrachlorophthalate, chlorendic anhydride, chlorendic acid and tetrachlorobisphenol A, or a mixture of at least two selected therefrom.

Preferably, the inorganic flame retardant is anyone selected from the group consisting of aluminum hydroxide, magnesium hydroxide, antimony trioxide and zinc borate, or a mixture of at least two selected therefrom.

Preferably, the halogen-free epoxy resin is anyone selected from the group consisting of bisphenol A type epoxy resin, bisphenol F type epoxy resin, phenol type novolac epoxy resin, bisphenol A type novolac epoxy resin, o-cresol novolac epoxy resin, dicyclopentadiene type epoxy resin, isocyanate type epoxy resin and biphenyl type epoxy resin, or a mixture of at least two selected therefrom.

Preferably, the halogen-free epoxy resin in the flame retardant resin composition is in an amount of 70-95 wt.%, e.g. 70 wt.%, 73 wt.%, 75 wt.%, 78 wt.%, 80 wt.%, 83 wt.%, 85 wt.%, 88 wt.%, 90 wt.%, 92 wt.%, 94 wt.% or 95 wt.%.

In another aspect, the present invention provides a thermosetting resin composition comprising the flame retardant resin composition above.

Preferably, the thermosetting resin composition further comprises a curing agent.

Preferably, the curing agent is anyone selected from the group consisting of dicyandiamide, phenolic resin, aromatic amine, anhydride, active ester curing agent and active phenolic curing agent, or a mixture of at least two selected therefrom.

Preferably, the thermosetting resin composition further comprises a curing accelerator agent.

Preferably, the curing accelerator agent is anyone selected from the group consisting of imidazole curing accelerator, organic phosphine curing accelerator and tertiary amine curing accelerator, or a mixture of at least two selected therefrom.

Preferably, the imidazole curing accelerator is anyone selected from the group consisting of 2-methylimidazole, 2-ethyl-4-methylimidazole, 2-phenylimidazole, 2-undecyl-imidazole, 1-benzyl-2-methylimidazole, 2-heptadecylimidazole, 2-isopropyl-imidazole, 2-phenyl-4-methylimidazole, 2-dodecylimidazole and 1-cyanoethyl-2-methylimidazole, or a mixture of at least two selected therefrom, preferably 2-methylimidazole.

In another aspect, the present invention provides a prepreg prepared by impregnating or coating a substrate with the thermosetting resin composition above.

Preferably, the substrate is selected from the group consisting of glass fiber substrate, polyester substrate, polyimide substrate, ceramic substrate, and carbon fiber substrate.

In the present invention, there are no limits to the specific process conditions of the impregnating or coating. The "prepreg" is "bonding sheet" well-known to the skilled in the art.

The present invention further provides a composite metal substrate, and the substrate is prepared by surface-coating a metal layer, overlapping and laminating in sequence the prepreg above.

Preferably, the metal layer coated on the surface is selected from the group consisting of aluminium, copper, iron, and an alloy of any combination thereof.

Preferably, the composite metal substrate is anyone selected from the group consisting of CEM-1 copper-clad laminate, CEM-3 copper-clad laminate, FR-4 copper-clad laminate, FR-5 copper-clad laminate, CEM-1 aluminum-clad laminate, CEM-3 aluminum-clad laminate, FR-4 aluminum-clad laminate and FR-5 aluminum-clad laminate.

The present invention further provides a circuit board prepared by processing circuits on the surface of the composite metal substrate above.

In another aspect, the present invention provides a flame retardant electronic material comprising the flame retardant resin composition above.

Preferably, the flame retardant electronic material comprises the following components of from 70 to 90 parts by weight (e.g. 72, 75, 78, 80, 83, 85 or 88 parts by weight) of the flame retardant resin composition of the present invention , from 15 to 25 parts by weight (e.g. 17, 20, 22 or 24 parts by weight) of an organosilicon filler, from 5 to 10 parts by weight (e.g. 6, 7, 8 or 9 parts by weight) of a curing agent, from 1 to 3 parts by weight (e.g. 1.3, 1.5, 1.8, 2, 2.3, 2.5 or 2.8 parts by weight) of a curing accelerator, from 2 to 8 parts by weight (e.g. 2.3, 2.5, 3, 3.5, 4, 4.5, 5, 6, 7 or 7.5 parts by weight) of a diluent and from 1 to 3 parts by weight (e.g. 1.3, 1.5, 1.8, 2, 2.3, 2.5 or 2.8 parts by weight) of a defoamer.

Preferably, the organosilicon filler is N-(β-aminoethyl)-γ-aminopropyl-triethoxysilane and/or glycidyloxypropyltrimethoxysilane.

Preferably, the curing agent is anyone selected from the group consisting of 4,4-diaminodiphenyl ether, 4,4-diaminodiphenyl sulfone, methyltetrahydrophthalic anhydride and methylhexahydrophthalic anhydride, or a mixture of at least two selected therefrom.

Preferably, the curing accelerator is anyone selected from the group consisting of 2-methylimidazole, resorcinol, dimethylbenzylamine and 2-ethyl-4-methylimidazole, or a mixture of at least two selected therefrom.

Preferably, the diluent is anyone selected from the group consisting of 1,4-butanediol diglycidyl ether, ethylene glycol diglycidyl ether, resorcinol diglycidyl ether and 1,6-hexanediol diglycidyl ether, or a mixture of at least two selected therefrom.

The flame retardant resin composition according to the present invention can be used for the preparation of electronic materials, such as pouring sealants, which can improve the flame retardancy of the pouring sealants, and achieve a short dry time, low viscosity, good thermal conductivity and good stability.

As compared with the prior art, the present invention has the following beneficial effects.

The sulfur-containing flame retardant, phosphorus-containing flame retardant and/or nitrogen-containing flame retardant in the flame retardant resin composition of the present invention have synergistic effect, so as to make the prepared copper-clad laminate have good heat resistance, water resistance, adhesion, mechanical properties and electrical properties, while having good flame retardancy. The thermal decomposition temperature (5% weight loss) of the copper-clad laminate prepared by the flame retardant resin composition of the present invention can be as high as 390°C or more; the peel strength can be up to 2.4 kg/mm² or more; T-288 is more than 100 seconds; the heat-resistant limit of tin dipping achieves 40 times or more; the saturated water absorption can reach 0.22% or less; the combustibility (UL-94) achieves the V-0 level; and the pouring sealant prepared from the flame-retardant resin composition has a dry time of 9-10min at 80°C, a viscosity of 2800-3500 mPa·s, a thermal conductivity of 1.19-1.35 w/m·K, a hardness of 40-45 A, a good stability, and a flame retardancy of the V-0 level.

### Embodiments

The technical solution of the present invention will be further described below by way of specific embodiments. Those skilled in the art shall know clearly that the examples are merely illustrative of the present invention and should not be construed as limiting the present invention in particular.

### Example 1

4.9 g of p-benzenedithiol having a sulfur content of 45% and 6.2g of tetra-(2,6-dimethylphenyl)resorcinol bisphosphonate having a phosphorus content of 9.0% were added into 100 g of a liquid bisphenol A type epoxy resin having an epoxy equivalent of 186 g/eq, mixed to obtain a flame retardant resin composition having a sulfur content of 2% and a phosphorus content of 0.5%. An appropriate amount of acetone was added to be dissolved, and then 5.1g of dicyandiamide and 0.1g of 2-methylimidazole were added, and sufficiently dissolved. A CCL was prepared according to a known method, and referred to as CCL A. The performance test results of CCL A are shown in Table 1.

### Example 2

3.8 g of p-benzenedithiol having a sulfur content of 45% and 11.5g of DOPO etherified bisphenol A having a phenolic hydroxyl equivalent of 300.0g/eq and a phosphorus content of 10.0% were added into 100 g of a liquid bisphenol A type epoxy resin having an epoxy equivalent of 186 g/eq, mixed to obtain a flame retardant resin composition having a sulfur content of 1.5% and a phosphorus content of 1%. An appropriate amount of acetone was added to be dissolved, and then 46.8g of linear novolac resin having a phenolic hydroxyl equivalent of 105g/eq and 0.1g of 2-methylimidazole were added, and sufficiently dissolved. A CCL was prepared according to a known method, and referred to as CCL B. The performance test results of CCL B are shown in Table 1.

### Example 3

0.9 g of 4,4'-diaminodiphenyl disulfide having a sulfur content of 25.8% and 20.2g of general DOPO modified epoxy resin having an epoxy equivalent of 300.0g/eq and a phosphorus content of 3.0% were added into 100 g of a liquid bisphenol A type epoxy resin having an epoxy equivalent of 186 g/eq, mixed to obtain a flame retardant resin composition having a sulfur content of 0.2% and a phosphorus content of 0.5%. An appropriate amount of acetone was added to be dissolved, and then 6.6g of dicyandiamide and 0.1 g of 2-methylimidazole were added, and sufficiently dissolved. A CCL was prepared according to a known method, and referred to as CCL C. The performance test results of CCL C are shown in Table 1.

### Example 4

5.2 g of p-benzenedithiol having a sulfur content of 45% and 11.7g of DOPO etherified bisphenol A having a phenolic hydroxyl equivalent of 300.0g/eq and a phosphorus content of 10.0% were added into 100 g of a liquid bisphenol A type epoxy resin having an epoxy equivalent of 186 g/eq, mixed to obtain a flame retardant resin composition having a sulfur content of 2% and a phosphrus content of 1%. An appropriate amount of acetone was added to be dissolved, and then 44.7g of linear novolac resin having a phenolic hydroxyl equivalent of 105g/eq and 0.1g of 2-methylimidazole were added, and sufficiently dissolved. A CCL was prepared according to a known method, and referred to as CCL D. The performance test results of CCL D are shown in Table 1.

### Example 5

4.7 g of p-benzenedithiol having a sulfur content of 45% and 2.3g of biurea having a nitrogen content of 47.4% were added into 100 g of a liquid bisphenol A type epoxy resin having an epoxy equivalent of 186 g/eq, mixed to obtain a flame retardant resin composition having a sulfur content of 2% and a nitrogen content of 1%. An appropriate amount of acetone was added to be dissolved, and then 4.3g of dicyandiamide and 0.1 g of 2-methylimidazole were added, and sufficiently dissolved. A CCL was prepared according to a known method, and referred to as CCL E. The performance test results of CCL E are shown in Table 1.

### Example 6

3.5 g of p-benzenedithiol having a sulfur content of 45% and 3.2g of melamine having a nitrogen content of 66.7% were added into 100 g of a liquid bisphenol A type epoxy resin having an epoxy equivalent of 186 g/eq, mixed to obtain a flame retardant resin composition having a sulfur content of 1.5% and a nitrogen content of 2%. An appropriate amount of acetone was added to be dissolved, and then 43.3g of linear novolac resin having a phenolic hydroxyl equivalent of 105g/eq and 0.1 g of 2-methylimidazole were added, and sufficiently dissolved. A CCL was prepared according to a known method, and referred to as CCL F. The performance test results of CCL F are shown in Table 1.

### Example 7

0.8 g of 4,4'-diaminodiphenyl disulfide having a sulfur content of 25.8% and 2.3g of melamine having a nitrogen content of 66.7% were added into 100 g of a liquid bisphenol A type epoxy resin having an epoxy equivalent of 186 g/eq, mixed to obtain a flame retardant resin composition having a sulfur content of 0.2% and a nitrogen content of 1.5%. An appropriate amount of acetone was added to be dissolved, and then 5.2g of dicyandiamide and 0.1 g of 2-methylimidazole were added, and sufficiently dissolved. A CCL was prepared according to a known method, and referred to as CCL G. The performance test results of CCL G are shown in Table 1.

### Example 8

12.5 g of p-benzenedithiol having a sulfur content of 45% and 0.2g of biurea having a nitrogen content of 47.4% were added into 100 g of a liquid bisphenol A type epoxy resin having an epoxy equivalent of 186 g/eq, mixed to obtain a flame retardant resin composition having a sulfur content of 5% and a nitrogen content of 0.1%. An appropriate amount of acetone was added to be dissolved, and then 37.2g of linear novolac resin having a phenolic hydroxyl equivalent of 105g/eq and 0.1 g of 2-methylimidazole were added, and sufficiently dissolved. A CCL was prepared according to a known method, and referred to as CCL H. The performance test results of CCL H are shown in Table 1.

### Example 9

5.0 g of p-benzenedithiol having a sulfur content of 45%, 6.3g of tetra-(2,6-dimethylphenyl)resorcinol bisphosphonate having a phosphorus content of 9.0% and 2.4g of biurea having a nitrogen content of 47.4% were added into 100 g of a liquid bisphenol A type epoxy resin having an epoxy equivalent of 186 g/eq, mixed to obtain a flame retardant resin composition having a sulfur content of 2%, a phosphorus content of 0.5% and a nitrogen content of 1%. An appropriate amount of acetone was added to be dissolved, and then 4.2g of dicyandiamide and 0.1 g of 2-methylimidazole were added, and sufficiently dissolved. A CCL was prepared according to a known method, and referred to as CCL I. The performance test results of CCL I are shown in Table 1.

### Example 10

4.0 g of p-benzenedithiol having a sulfur content of 45%, 11.8g of DOPO etherified bisphenol A having a phosphorus content of 10.0% and 3.6g of melamine having a nitrogen content of 66.7% were added into 100 g of a liquid bisphenol A type epoxy resin having an epoxy equivalent of 186 g/eq, mixed to obtain a flame retardant resin composition having a sulfur content of 1.5%, a phosphorus content of 1% and a nitrogen content of 2%. An appropriate amount of acetone was added to be dissolved, and then 41.5g of linear novolac resin having a phenolic hydroxyl equivalent of 105g/eq and 0.1 g of 2-methylimidazole were added, and sufficiently dissolved. A CCL was prepared according to a known method, and referred to as CCL J. The performance test results of CCL J are shown in Table 2.

### Example 11

1 g of 4,4'-diaminodiphenyl disulfide having a sulfur content of 25.8% and 20.6g of general DOPO modified epoxy resin having an epoxy equivalent of 300.0g/eq and a phosphorus content of 3.0% and 2.8g of melamine having a nitrogen content of 66.7% were added into 100 g of a liquid bisphenol A type epoxy resin having an epoxy equivalent of 186 g/eq, mixed to obtain a flame retardant resin composition having a sulfur content of 0.2%, a phosphorus content of 0.5% and a nitrogen content of 1.5%. An appropriate amount of acetone was added to be dissolved, and then 5.0g of dicyandiamide and 0.1 g of 2-methylimidazole were added, and sufficiently dissolved. A CCL was prepared according to a known method, and referred to as CCL K. The performance test results of CCL K are shown in Table 1.

### Example 12

2.5 g of p-benzenedithiol having a sulfur content of 45%, 11.4g of DOPO etherified bisphenol A having a phosphorus content of 10.0% and 0.2g of biurea having a nitrogen content of 47.4% were added into 100 g of a liquid bisphenol A type epoxy resin having an epoxy equivalent of 186 g/eq, mixed to obtain a flame retardant resin composition having a sulfur content of 1%, a phosphorus content of 1% and a nitrogen content of 0.1%. An appropriate amount of acetone was added to be dissolved, and then 52g of linear novolac resin having a phenolic hydroxyl equivalent of 105g/eq and 0.1 g of 2-methylimidazole were added, and sufficiently dissolved. A CCL was prepared according to a known method, and referred to as CCL L. The performance test results of CCL L are shown in Table 2.

### Comparative Example 1

5.9 g of p-benzenedithiol having a sulfur content of 45% was added into 100 g of a liquid bisphenol A type epoxy resin having an epoxy equivalent of 186 g/eq, mixed to obtain a flame retardant resin composition having a sulfur content of 2.5%. An appropriate amount of acetone was added to be dissolved, and then 5.0g of dicyandiamide and 0.1 g of 2-methylimidazole were added, and sufficiently dissolved. A CCL was prepared according to a known method, and referred to as CCL M. The performance test results of CCL M are shown in Table 2.

### Comparative Example 2

38.5g of tetra-(2,6-dimethylphenyl)resorcinol bisphosphonate having a phosphorus content of 9.0% was added into 100 g of a liquid bisphenol A type epoxy resin having an epoxy equivalent of 186 g/eq, mixed to obtain a flame retardant resin composition having a phosphorus content of 2.5%. An appropriate amount of acetone was added to be dissolved, and then 5.9g of dicyandiamide and 0.1 g of 2-methylimidazole were added, and sufficiently dissolved. A CCL was prepared according to a known method, and referred to as CCL N. The performance test results of CCL N are shown in Table 2.

### Comparative Example 3

7.1 g of p-benzenedithiol having a sulfur content of 45% was added into 100 g of a liquid bisphenol A type epoxy resin having an epoxy equivalent of 186 g/eq, mixed to obtain a flame retardant resin composition having a sulfur content of 3%. An appropriate amount of acetone was added to be dissolved, and then 4.8g of dicyandiamide and 0.1 g of 2-methylimidazole were added, and sufficiently dissolved. A CCL was prepared according to a known method, and referred to as CCL P. The performance test results of CCL P are shown in Table 2.

### Comparative Example 4

6.7 g of biurea having a nitrogen content of 47.4% was added into 100 g of a liquid bisphenol A type epoxy resin having an epoxy equivalent of 186 g/eq, mixed to obtain a flame retardant resin composition having a nitrogen content of 3%. An appropriate amount of acetone was added to be dissolved, and then 3.4g of dicyandiamide and 0.1 g of 2-methylimidazole were added, and sufficiently dissolved. A CCL was prepared according to a known method, and referred to as CCL Q. The performance test results of CCL Q are shown in Table 2.

### Comparative Example 5

34.3g of tetra-(2,6-dimethylphenyl)resorcinol bisphosphonate having a phosphorus content of 9.0% and 2.9 g of biurea having a nitrogen content of 47.4% were added into 100 g of a liquid bisphenol A type epoxy resin having an epoxy equivalent of 186 g/eq, mixed to obtain a flame retardant resin composition having a phosphorus content of 2.5% and a nitrogen content of 1%. An appropriate amount of acetone was added to be dissolved, and then 4.8g of dicyandiamide and 0.1 g of 2-methylimidazole were added, and sufficiently dissolved. A CCL was prepared according to a known method, and referred to as CCL R. The performance test results of CCL R are shown in Table 2.

### Comparative Example 6

6.3g of tetra-(2,6-dimethylphenyl)resorcinol bisphosphonate having a phosphorus content of 9.0% and 7.2 g of biurea having a nitrogen content of 47.4% were added into 100 g of a liquid bisphenol A type epoxy resin having an epoxy equivalent of 186 g/eq, mixed to obtain a flame retardant resin composition having a phosphorus content of 0.5% and a nitrogen content of 3%. An appropriate amount of acetone was added to be dissolved, and then 3.2g of dicyandiamide and 0.1 g of 2-methylimidazole were added, and sufficiently dissolved. A CCL was prepared according to a known method, and referred to as CCL S. The performance test results of CCL S are shown in Table 2.

**Table 1**

| | | Example 1 | Example 2 | Example 3 | Example 4 | Example 5 | Example 6 | Example 7 | Example 8 | Example 9 |
|---|---|---|---|---|---|---|---|---|---|---|
| Test items | Unit | Copper -clad plate A | Copper-c1 ad plate B | Copper-clad plate C | Copper-clad plate D | Copper-clad plate E | Copper-clad plate F | Copper-clad plate G | Copper-clad plate H | Copper -clad plate I |
| Thermal decomposition temperature | 5% weight loss/°C | 365 | 373 | 369 | 368 | 378 | 375 | 373 | 370 | 403 |
| Peel strength | kg/cm² | 2.3 | 2.0 | 2.2 | 2.1 | 2.3 | 2.1 | 2.2 | 2.1 | 2.9 |
| T-288 | second | >100 | >100 | >100 | >100 | >100 | >100 | >100 | >100 | >100 |
| heat-resistant limit | Times/tin dipping | 33 | 36 | 38 | 35 | 44 | 42 | 43 | 40 | 46 |
| Saturated water absorption | wt%/PC T | 0.33 | 0.29 | 0.32 | 0.32 | 0.28 | 0.29 | 0.32 | 0.33 | 0.18 |
| Flame retardancy | UL-94 | V-0 | V-0 | V-0 | V-0 | V-0 | V-0 | V-0 | V-0 | V-0 |

**Table 2**

| | | Example 10 | Example 11 | Example 12 | Com. Example 1 | Com. Example 2 | Com. Example 3 | Com. Example 4 | Com. Example 5 | Com. Example 6 |
|---|---|---|---|---|---|---|---|---|---|---|
| Test items | Unit | Copper clad plate J | Copper clad plate K | Copper clad plate L | Copper clad plate M | Copper clad plate N | Copper clad plate P | Copper clad plate Q | Copper clad plate R | Copper clad plate S |
| Thermal decomposition temperature | 5% weight loss/°C | 395 | 390 | 393 | 269 | 272 | 282 | 295 | 271 | 268 |
| Peel strength | kg/cm² | 2.7 | 2.4 | 2.5 | 1.0 | 1.3 | 1.2 | 1.3 | 1.8 | 1.7 |
| T-288 | second | >100 | >100 | >100 | 22 | 25 | 26 | 28 | 65 | 70 |
| heat-resistant limit | Times/tin dipping | 44 | 40 | 42 | 7 | 9 | 9 | 10 | 25 | 22 |
| Saturated water absorption | wt%/PCT | 0.19 | 0.22 | 0.2 | 0.45 | 0.41 | 0.45 | 0.41 | 0.42 | 0.40 |
| Flame retardancy | UL-94 | V-0 | V-0 | V-0 | Complete combustion | Complete combustion | Complete combustion | Complete combustion | Combustion | Combustion |

As can be seen from the test results in Tables 1 and 2, the thermal decomposition temperature (5% weight loss) of the copper-clad laminate prepared by using the flame retardant resin composition of the present invention can be as high as 365°C or more; the peel strength thereof can be up to 2.0 kg/mm² or more; T-288 is more than 100 seconds; the heat-resistant limit of tin dipping is 33 times or more; the saturated water absorption can reach 0.33% or less; and the flammability (UL-94) reaches the V-0 level.

For the flame retardant resin composition containing the sulfur-containing flame retardant and the phosphorus-containing flame retardant, the prepared copper-clad laminate is inferior in flame retardancy and other properties when the phosphorus-containing flame retardant is not used, and the amount of the sulfur-containing flame retardant is increased so that the sulfur element content is equal to the sum of the sulfur content and phosphorus content in Example 1 (Comparative Example 1). Likewise, when the sulfur-containing flame retardant is not used, and the amount of the phosphorus-containing flame retardant is increased so that the amount of the phosphorus element content is equal to the sum of the sulfur and phosphorus element contents in Example 1 (Comparative Example 2), the obtained copper-clad laminate is also poor in flame retardancy and other properties. Therefore, it is described that the sulfur- and phosphorus-containing flame retardants in the flame retardant property have a synergistic effect.

For the flame retardant resin composition containing the sulfur-containing flame retardant and the nitrogen-containing flame retardant, the prepared copper-clad laminate is inferior in flame retardancy and other properties when the nitrogen-containing flame retardant is not used, and the amount of the sulfur-containing flame retardant is increased so that the sulfur element content is equal to the sum of the sulfur content and nitrogen content in Example 5 (Comparative Example 3). Likewise, when the sulfur-containing flame retardant is not used, and the amount of the nitrogen-containing flame retardant is increased so that the amount of the nitrogen element content is equal to the sum of the sulfur and nitrogen element contents in Example 5 (Comparative Example 4), the obtained copper-clad laminate is also poor in flame retardancy and other properties. Therefore, it is described that the sulfur- and nitrogen-containing flame retardants in the flame retardant property have a synergistic effect.

For the flame retardant resin composition containing the sulfur-containing flame retardant, the nitrogen-containing flame retardant and the phosphorus-containing flame retardant, the prepared copper-clad laminate is inferior in flame retardancy and other properties when the sulfur-containing flame retardant is not used, and the amount of the phosphorus-containing flame retardant is increased so that the phosphorus element content is equal to the sum of the sulfur content and phosphorus content in Example 9 (Comparative Example 5), or the amount of the nitrogen-containing flame retardant is increased so that the nitrogen element content is equal to the sum of the sulfur content and nitrogen content in Example 9 (Comparative Example 6). Other properties such as heat resistance, water resistance and so on are relatively poor, indicating that sulfur-containing flame retardants, phosphorus-containing flame retardants and nitrogen-containing flame retardants have synergistic effect so as to make the prepared CCL has good heat resistance, water resistance, adhesion, mechanical properties and electrical properties while having good flame resistance.

Therefore, the sulfur-containing flame retardant of the present invention has synergistic effect with the phosphorus-containing flame retardant and/or the nitrogen-containing flame retardant, so as to enhance the flame-retardant property of the resin composition, and to make the prepared CCL has good heat resistance, water resistance, adhesion, mechanical properties and electrical properties while having good flame resistance.

### Example 13

4.9 g of p-benzenedithiol having a sulfur content of 45% and 6.2g of tetra-(2,6-dimethylphenyl)resorcinol bisphosphonate having a phosphorus content of 9.0% were added into 100 g of a liquid bisphenol A type epoxy resin having an epoxy equivalent of 186 g/eq, mixed to obtain a flame retardant resin composition having a sulfur content of 2% and a phosphorus content of 0.5%. 80 parts by weight of the flame retardant resin composition, 20 parts by weight of N-(β-aminoethyl)-γ-aminopropyltriethoxysilane, 5 parts by weight of 4,4-diamino-diphenyl ether, 3 parts by weight of 2-methylimidazole, 3 parts by weight of 1,4-butanediol diglycidyl ether and 2 parts by weight of the defoamer airex940 were used to prepare a pouring sealant A according to a known method in the art. The performance test results of the pouring sealant A are shown in Table 3.

### Example 14

4.7 g of p-benzenedithiol having a sulfur content of 45% and 2.3g of biurea having a nitrogen content of 47.4% were added into 100 g of a liquid bisphenol A type epoxy resin having an epoxy equivalent of 186 g/eq, mixed to obtain a flame retardant resin composition having a sulfur content of 2% and a nitrogen content of 1%. 70 parts by weight of the flame retardant resin composition, 25 parts by weight of glycidyloxypropyltrimethoxysilane, 7 parts by weight of 4,4-diaminodiphenylsulfone, 1 part by weight of 2-methylimidazole, 2 parts by weight of ethylene glycol diglycidyl ether and 1 part by weight of the defoamer airex940 were used to prepare a pouring sealant B according to a known method in the art. The performance test results of the pouring sealant B are shown in Table 3.

### Example 15

5.0g of p-benzenedithiol having a sulfur content of 45%, 6.3g of tetra-(2,6-dimethylphenyl)resorcinol bisphosphonate having a phosphorus content of 9.0% and 2.4g of biurea having a nitrogen content of 47.4% were added into 100 g of a liquid bisphenol A type epoxy resin having an epoxy equivalent of 186 g/eq, mixed to obtain a flame retardant resin composition having a sulfur content of 2%, a phosphorus content of 0.5% and a nitrogen content of 1%. 90 parts by weight of the flame retardant resin composition, 15 parts by weight of glycidyloxypropyltrimethoxysilane,10 parts by weight of hexahydrophthalic anhydride, 2 parts by weight of 2-ethyl-4-methylimidazole, 8 parts by weight of 1,6-hexanediol diglycidyl ether and 3 parts by weight of the defoamer airex940 were used to prepare a pouring sealant C according to a known method in the art. The performance test results of the pouring sealant C are shown in Table 3.

### Comparative Example 7

The difference from Example 13 lies in that 5.9g of p-benzenedithiol having a sulfur content of 45% was added into 100 g of a liquid bisphenol A type epoxy resin having an epoxy equivalent of 186 g/eq, mixed to obtain a flame retardant resin composition having a sulfur content of 2.5%. Besides, the component proportion of the pouring sealant and the preparation method were the same as those in Example 13, to obtain a pouring sealant D. The performance test results of the pouring sealant D are shown in Table 3.

### Comparative Example 8

The difference from Example 13 lies in that 38.5g of tetra-(2,6-dimethylphenyl)resorcinol bisphosphonate having a phosphorus content of 9.0% was added into 100 g of a liquid bisphenol A type epoxy resin having an epoxy equivalent of 186 g/eq, mixed to obtain a flame retardant resin composition having a phosphorus content of 2.5%. Besides, the component proportion of the pouring sealant and the preparation method were the same as those in Example 13, to obtain a pouring sealant E. The performance test results of the pouring sealant E are shown in Table 3.

### Comparative Example 9

The difference from Example 14 lies in that 7.1g of p-benzenedithiol having a sulfur content of 45% was added into 100 g of a liquid bisphenol A type epoxy resin having an epoxy equivalent of 186 g/eq, mixed to obtain a flame retardant resin composition having a sulfur content of 3%. Besides, the component proportion of the pouring sealant and the preparation method were the same as those in Example 14, to obtain a pouring sealant F. The performance test results of the pouring sealant F are shown in Table 3.

### Comparative Example 10

The difference from Example 14 lies in that 6.7g of biurea having a nitrogen content of 47.4% was added into 100 g of a liquid bisphenol A type epoxy resin having an epoxy equivalent of 186 g/eq, mixed to obtain a flame retardant resin composition having a nitrogen content of 3%. Besides, the component proportion of the pouring sealant and the preparation method were the same as those in Example 14, to obtain a pouring sealant G. The performance test results of the pouring sealant G are shown in Table 3.

### Comparative Example 11

The difference from Example 15 lies in that 34.3g of tetra-(2,6-dimethylphenyl)resorcinol bisphosphonate having a phosphorus content of 9.0% and 2.9g of biurea having a nitrogen content of 47.4% were added into 100 g of a liquid bisphenol A type epoxy resin having an epoxy equivalent of 186 g/eq, mixed to obtain a flame retardant resin composition having a phosphorus content of 2.5% and a nitrogen content of 1%. Besides, the component proportion of the pouring sealant and the preparation method were the same as those in Example 15, to obtain a pouring sealant H. The performance test results of the pouring sealant H are shown in Table 3.

### Comparative Example 12

The difference from Example 15 lies in that 6.3g of tetra-(2,6-dimethylphenyl)resorcinol bisphosphonate having a phosphorus content of 9.0% and 7.2g of biurea having a nitrogen content of 47.4% were added into 100 g of a liquid bisphenol A type epoxy resin having an epoxy equivalent of 186 g/eq, mixed to obtain a flame retardant resin composition having a phosphorus content of 0.5% and a nitrogen content of 3%. Besides, the component proportion of the pouring sealant and the preparation method were the same as those in Example 15, to obtain a pouring sealant I. The performance test results of the pouring sealant I are shown in Table 3.

**Table 3**

| | | Example 13 | Example 14 | Example 15 | Com. Example 7 | Com. Example 8 | Com. Example 9 | Com. Example 10 | Com. Example 11 | Com. Example 12 |
|---|---|---|---|---|---|---|---|---|---|---|
| Test item | Method | pouring | pouring | pouring | pouring | pouring | pouring | pouring | pouring | pouring |
| | | sealant A | sealant B | sealant C | sealant D | sealant E | sealant F | sealant G | sealant H | sealant I |
| 80°C dry time (min) | GB/T1347 7 | 10 | 9 | 10 | 11 | 12 | 12 | 11 | 10 | 10 |
| viscosity (mPa • s) | GB/T2794 -1995 | 2800 | 3200 | 3500 | 7500 | 7800 | 7000 | 6600 | 6500 | 6700 |
| Thermal conductivity (w/m • K) | GB/T531-1999 | 1.2 | 1.35 | 1.19 | 0.77 | 0.81 | 0.63 | 0.67 | 0.92 | 0.85 |
| hardness (Shore A) | GB/T531-1999 | 45 | 40 | 42 | 69 | 73 | 65 | 60 | 68 | 65 |
| stability | | Better | Better | Better | genera 1 | genera 1 | genera 1 | genera 1 | genera 1 | genera 1 |
| flame retardancy | UL-94 | V-0 | V-0 | V-0 | Complete combustion | Complete combustion | Complete combustion | Complete combustion | Combustion | Combustion |

From the comparison of the test results of Examples 13 to 15 and Comparative Examples 7 to 12 in Table 3, it can be seen that, due to the synergistic effect of the sulfur-containing, phosphorus-containing and/or nitrogen-containing flame retardants, the pouring sealants prepared according to the present invention has a short dry time, low viscosity, good thermal conductivity, good stability while having good flame retardancy, and is suitable for a variety of electronic materials.

The applicant claims that the present invention describes a flame retardant resin composition, a thermosetting resin composition, a composite metal substrate, and a flame retardant electronic material of the present invention by the above-described examples. However, the present invention is not limited to the above-described examples, and it is not intended that the present invention only can be carried out with respect to the above-described examples. Those skilled in the art should know that any improvements to the present invention, equivalent replacements of the raw materials of the present invention, addition of auxiliary ingredients, selection of specific ways and the like all fall within the protection scope and disclosure scope of the present invention.

## Claims

1. A flame retardant resin composition, **characterized in that** the flame retardant composition comprises a sulfur-containing flame retardant and a halogen-free epoxy resin, the flame-retardant resin composition further comprises a phosphorus-containing flame retardant and/or a nitrogen-containing flame retardant, wherein the sulfur-containing flame retardant is p-benzenedithiol and/or 4,4'-diaminodiphenyl disulfide.

2. A thermosetting resin composition, **characterized in that** the thermosetting resin composition comprises the flame retardant resin composition according to claim 1.

3. The thermosetting resin composition according to claim 2, **characterized in that** the thermosetting resin composition further comprises a curing agent;
preferably, the curing agent is anyone selected from the group consisting of dicyandiamide, phenolic resin, aromatic amine, anhydride, active ester curing agent and active phenolic curing agent, or a mixture of at least two selected therefrom;
preferably, the thermosetting resin composition further comprises a curing accelerator agent;
preferably, the curing accelerator agent is anyone selected from the group consisting of imidazole curing accelerator, organic phosphine curing accelerator and tertiary amine curing accelerator, or a mixture of at least two selected therefrom;
preferably, the imidazole curing accelerator is anyone selected from the group consisting of 2-methylimidazole, 2-ethyl-4-methylimidazole, 2-phenylimidazole, 2-undecyl- imidazole, 1-benzyl-2-methylimidazole, 2-heptadecylimidazole, 2-isopropyl- imidazole, 2-phenyl-4-methylimidazole, 2-dodecylimidazole and 1-cyanoethyl- 2-methylimidazole, or a mixture of at least two selected therefrom, preferably 2-methylimidazole.

4. A prepreg, **characterized in that** the prepreg is prepared by impregnating or coating a substrate with the thermosetting resin composition according to claim 2 or 3;
preferably, the substrate is anyone selected from the group consisting of glass fiber substrate, polyester substrate, polyimide substrate, ceramic substrate, and carbon fiber substrate.

5. A composite metal substrate, **characterized in that** the substrate is prepared by surface-coating a metal layer, overlapping and laminating in sequence the prepreg according to claim 4;
preferably, the metal layer coated on the surface is selected from the group consisting of aluminium, copper, iron, and an alloy of any combination thereof;
preferably, the composite metal substrate is anyone selected from the group consisting of CEM-1 copper-clad laminate, CEM-3 copper-clad laminate, FR-4 copper-clad laminate, FR-5 copper-clad laminate, CEM-1 aluminum-clad laminate, CEM-3 aluminum-clad laminate, FR-4 aluminum-clad laminate and FR-5 aluminum-clad laminate.

6. A circuit board, **characterized in that** the circuit board is prepared by processing circuits on the surface of the composite metal substrate according to claim 5.

7. A flame retardant electronic material, **characterized in that** the flame retardant electronic material comprises the flame retardant resin composition according to claim 1;
preferably, the flame retardant electronic material comprises the following components of from 70 to 90 parts by weight of the flame retardant resin composition according to any of claims 1 to 4, from 15 to 25 parts by weight of an organosilicon filler, from 5 to 10 parts by weight of a curing agent, from 1 to 3 parts by weight of a curing accelerator, from 2 to 8 parts by weight of a diluent and from 1 to 3 parts by weight of a defoamer;
preferably, the organosilicon filler is N-(β-aminoethyl)-γ-aminopropyl-triethoxysilane and/or glycidyloxypropyltrimethoxysilane;
preferably, the curing agent is anyone selected from the group consisting of 4,4-diaminodiphenyl ether, 4,4-diaminodiphenyl sulfone, methyltetrahydrophthalic anhydride and methylhexahydrophthalic anhydride, or a mixture of at least two selected therefrom;
preferably, the curing accelerator is anyone selected from the group consisting of 2-methylimidazole, resorcinol, dimethylbenzylamine and 2-ethyl-4-methylimidazole, or a mixture of at least two selected therefrom.

## Patentansprüche

1. Flammhemmende Harzzusammensetzung, **dadurch gekennzeichnet, dass** die flammhemmende Zusammensetzung ein schwefelhaltiges flammhemmendes Mittel und ein halogenfreies Epoxyharz umfasst, wobei die flammhemmende Harzzusammensetzung ferner ein phosphorhaltiges flammhemmendes Mittel und/oder ein stickstoffhaltiges flammhemmendes Mittel umfasst, wobei das schwefelhaltige flammhemmende Mittel p-Benzendithiol und/oder 4,4'-Diaminodiphenyldisulfid ist.

2. Wärmehärtende Harzzusammensetzung, **dadurch gekennzeichnet, dass** die wärmehärtende Harzzusammensetzung die flammhemmende Harzzusammensetzung gemäß Anspruch 1 umfasst.

3. Wärmehärtende Harzzusammensetzung gemäß Anspruch 2, **dadurch gekennzeichnet, dass** die wärmehärtende Harzzusammensetzung ferner ein Härtungsmittel umfasst; wobei bevorzugt das Härtungsmittel eines ist, welches aus der Gruppe ausgewählt ist, die aus Dicyandiamid, Phenolharz, aromatischem Amin, Anhydrid, aktivem Ester-Härtungsmittel und aktivem Phenol-Härtungsmittel oder einem Gemisch von mindestens zwei davon ausgewählten besteht;
wobei bevorzugt die wärmehärtende Harzzusammensetzung ferner ein Härtungsbeschleunigungsmittel umfasst;
wobei bevorzugt das Härtungsbeschleunigungsmittel eines ist, welches aus der Gruppe ausgewählt ist, die aus Imidazol-Härtungsbeschleuniger, organisches Phosphin-Härtungsbeschleuniger und tertiäres Amin-Härtungsbeschleuniger oder einem Gemisch von mindestens zwei davon ausgewählten besteht;
wobei bevorzugt der Imidazol-Härtungsbeschleuniger einer ist, welcher aus der Gruppe ausgewählt ist, die aus 2-Methylimidazol, 2-Ethyl-4-methylimidazol, 2-Phenylimidazol, 2-Undecylimidazol, 1-Benzyl-2-methylimidazol, 2-Heptadecylimidazol, 2-Isopropylimidazol, 2-Phenyl-4-methylimidazol, 2-Dodecylimidazol und 1-Cyanoethyl-2-methylimidazol oder einem Gemisch von mindestens zwei davon ausgewählten besteht, bevorzugt 2-Methylimidazol ist.

4. Prepreg, **dadurch gekennzeichnet, dass** das Prepreg durch Imprägnieren oder Beschichten eines Substrats mit der wärmehärtenden Harzzusammensetzung gemäß Anspruch 2 oder 3 hergestellt wird;
wobei bevorzugt das Substrat eines ist, welches aus der Gruppe ausgewählt ist, die aus Glasfasersubstrat, Polyestersubstrat, Polyimidsubstrat, Keramiksubstrat und Kohlenstofffasersubstrat besteht.

5. Verbundmetallsubstrat, **dadurch gekennzeichnet, dass** das Substrat durch nacheinander Oberflächenbeschichten einer Metallschicht, Überlappen und Laminieren des Prepregs gemäß Anspruch 4 hergestellt wird;
wobei bevorzugt die auf der Oberfläche beschichtete Metallschicht aus der Gruppe ausgewählt ist, welche aus Aluminium, Kupfer, Eisen und einer Legierung von jedweder Kombination davon besteht;
wobei bevorzugt das Verbundmetallsubstrat eines ist, welches aus der Gruppe ausgewählt ist, die aus kupferkaschiertem CEM-1-Laminat, kupferkaschiertem CEM-3-Laminat, kupferkaschiertem FR-4-Laminat, kupferkaschiertem FR-5-Laminat, aluminiumkaschiertem CEM-1-Laminat, aluminiumkaschiertem CEM-3-Laminat, aluminiumkaschiertem FR-4-Laminat und aluminiumkaschiertem FR-5-Laminat besteht.

6. Platine, **dadurch gekennzeichnet, dass** die Platine durch Verarbeiten von Schaltungen auf der Oberfläche des Verbundmetallsubstrats gemäß Anspruch 5 hergestellt wird.

7. Flammhemmendes elektronisches Material, **dadurch gekennzeichnet, dass** das flammhemmende elektronische Material die flammhemmende Harzzusammensetzung gemäß Anspruch 1 umfasst;
wobei bevorzugt das flammhemmende elektronische Material die folgenden Komponenten umfasst: 70 bis 90 Gewichtsteile der flammhemmenden Harzzusammensetzung gemäß einem der Ansprüche 1 bis 4, 15 bis 25 Gewichtsteile eines Organosilicium-Füllstoffes, 5 bis 10 Gewichtsteile eines Härtungsmittels, 1 bis 3 Gewichtsteile eines Härtungsbeschleunigers, 2 bis 8 Gewichtsteile eines Verdünnungsmittels und 1 bis 3 Gewichtsteile eines Antischaummittels;
wobei bevorzugt der Organosilicium-Füllstoff N-(β-Aminoethyl)-γ-aminopropyltriethoxysilan und/oder Glycidyloxypropyltrimethoxysilan ist;
wobei bevorzugt das Härtungsmittel eines ist, welches aus der Gruppe ausgewählt ist, die aus 4,4-Diaminodiphenylether, 4,4-Diaminodiphenylsulfon, Methyltetrahydrophthalsäureanhydrid und Methylhexahydrophthalsäureanhydrid oder einem Gemisch von mindestens zwei davon ausgewählten besteht;
wobei bevorzugt der Härtungsbeschleuniger einer ist, welcher aus der Gruppe ausgewählt ist, die aus 2-Methylimidazol, Resorcinol, Dimethylbenzylamin und 2-Ethyl-4-methylimidazol oder einem Gemisch von mindestens zwei davon ausgewählten besteht.

## Revendications

1. Composition de résine ignifuge, **caractérisée en ce que** la composition ignifuge comprend un ignifuge contenant du soufre et une résine époxyde exempte d'halogène, la composition de résine ignifuge comprend en outre un ignifuge contenant du phosphore et/ou un ignifuge contenant de l'azote, dans laquelle l'ignifuge contenant du soufre est le p-benzènedithiol et/ou le disulfure de 4,4'-diaminodiphényle.

2. Composition de résine thermodurcissable, **caractérisée en ce que** la composition de résine thermodurcissable comprend la composition de résine ignifuge selon la revendication 1.

3. Composition de résine thermodurcissable selon la revendication 2, **caractérisée en ce que** la composition de résine thermodurcissable comprend en outre un agent de durcissement ;
de préférence, l'agent de durcissement est l'un quelconque sélectionné dans le groupe consistant en un dicyandiamide, une résine phénolique, une amine aromatique, un anhydride, un agent de durcissement de type ester actif et un agent de durcissement phénolique actif, ou un mélange d'au moins deux sélectionnés parmi ceux-ci ;
de préférence, la composition de résine thermodurcissable comprend en outre un agent accélérateur de durcissement ;
de préférence, l'agent accélérateur de durcissement est l'un quelconque sélectionné dans le groupe consistant en un accélérateur de durcissement à base d'imidazole, un accélérateur de durcissement à base de phosphine organique et un accélérateur de durcissement à base d'amine tertiaire, ou un mélange d'au moins deux sélectionnés parmi ceux-ci ;
de préférence, l'accélérateur de durcissement à base d'imidazole est l'un quelconque sélectionné dans le groupe consistant en le 2-méthylimidazole, le 2-éthyl-4-méthylimidazole, le 2-phénylimidazole, le 2-undécyl-imidazole, le 1-benzyl-2-méthylimidazole, le 2-heptadécylimidazole, le 2-isopropyl-imidazole, le 2-phényl-4-méthylimidazole, le 2-dodécylimidazole et le 1-cyanoéthyl-2-méthylimidazole, ou un mélange d'au moins deux sélectionnés parmi ceux-ci, de préférence le 2-méthylimidazole.

4. Préimprégné, **caractérisé en ce que** le préimprégné est préparé par l'imprégnation ou le revêtement d'un substrat avec la composition de résine thermodurcissable selon la revendication 2 ou 3 ;
de préférence, le substrat est l'un quelconque sélectionné dans le groupe consistant en un substrat en fibre de verre, un substrat en polyester, un substrat en polyimide, un substrat en céramique, et un substrat en fibre de carbone.

5. Substrat métallique composite, **caractérisé en ce que** le substrat est préparé par le revêtement en surface d'une couche métallique, en chevauchant et stratifiant en séquence le préimprégné selon la revendication 4 ;
de préférence, la couche métallique revêtue sur la surface est sélectionnée dans le groupe consistant en l'aluminium, le cuivre, le fer, et un alliage de n'importe quelle combinaison de ceux-ci ;
de préférence, le substrat métallique composite est l'un quelconque sélectionné dans le groupe consistant en un stratifié recouvert de cuivre CEM-1, un stratifié recouvert de cuivre CEM-3, un stratifié recouvert de cuivre FR-4, un stratifié recouvert de cuivre FR-5, un stratifié recouvert d'aluminium CEM-1, un stratifié recouvert d'aluminium CEM-3, un stratifié recouvert d'aluminium FR-4 et un stratifié recouvert d'aluminium FR-5.

6. Carte de circuit, **caractérisée en ce que** la carte de circuit est préparée en reproduisant des circuits sur la surface du substrat métallique composite selon la revendication 5.

7. Matériau électronique ignifuge, **caractérisé en ce que** le matériau électronique ignifuge comprend la composition de résine ignifuge selon la revendication 1 ;
de préférence, le matériau électronique ignifuge comprend les composants suivants de 70 à 90 parties en poids de la composition de résine ignifuge selon l'une quelconque des revendications 1 à 4, de 15 à 25 parties en poids d'une charge d'organosilicium, de 5 à 10 parties en poids d'un agent de durcissement, de 1 à 3 parties en poids d'un accélérateur de durcissement, de 2 à 8 parties en poids d'un diluant et de 1 à 3 parties en poids d'un agent antimousse ;
de préférence, la charge d'organosilicium est le N-(β-aminoéthyl)-γ-aminopropyl-triéthoxysilane et/ou le glycidyloxypropyltriméthoxysilane ;
de préférence, l'agent de durcissement est l'un quelconque sélectionné dans le groupe consistant en le 4,4-diaminodiphényl éther, la 4,4-diaminodiphényl sulfone, l'anhydride méthyltétrahydrophtalique et l'anhydride méthylhexahydrophtalique, ou un mélange d'au moins deux sélectionnés parmi ceux-ci ;
de préférence, l'accélérateur de durcissement est l'un quelconque sélectionné dans le groupe consistant en le 2-méthylimidazole, le résorcinol, la diméthylbenzylamine et le 2-éthyl-4-méthylimidazole, ou un mélange d'au moins deux sélectionnés parmi ceux-ci.
